Europäisches Patentamt

European Patent Office

Office européen des brevets

(19)

(11) Publication number: **0 091 816**
A2

# (12) EUROPEAN PATENT APPLICATION

(21) Application number: 83302038.1

(22) Date of filing: 12.04.83

(51) Int. Cl.³: **B 62 D 55/28**

(30) Priority: 13.04.82 PC T/US82/00457

(43) Date of publication of application:
19.10.83 Bulletin 83/42

(84) Designated Contracting States:
FR GB IT

(71) Applicant: CATERPILLAR TRACTOR CO.
100 Northeast Adams Street
Peoria Illinois 61629(US)

(72) Inventor: Oertley, Thomas E.
1528 Timberdale
Dunlap Illinois 61525(US)

(74) Representative: Jackson, Peter Arthur et al,
GILL JENNINGS & EVERY 53-64 Chancery Lane
London WC2A 1HN(GB)

(54) Track shoe grouser assembly.

(57) A track shoe (10) employed on a track-laying vehicle for road use includes an elastomeric grouser (12) having a steel anchor plate (13) bonded thereto. A spacer (21) between the track shoe (10) and the anchor plate (13) defines a separation space (s) between the anchor plate (13) and the track shoe (10) which is filled by the elastomeric material of the grouser.

FIG-3

Croydon Printing Company Ltd.

- 1 -

## TRACK SHOE GROUSER ASSEMBLY

This invention relates to a track shoe and elastomeric grouser assembly for use in an endless track assembly.

Agricultural farmers generally prefer rubber-tyred tractors over track-laying tractors since the former tractors have road capabilities, i.e., they will not generally damage a road surface. This is extremely important where the tractor must be moved between fields separated by a road. In order to adapt the track-laying tractor for road use, it has long been deemed necessary to attach elastomeric grousers to the track shoes thereof. In an arrangement typical of those known heretofore, an elastomeric grouser is bonded to the outer surface of a steel anchor plate which is, in turn, bolted to a track shoe. A typical grouser arrangement of this type is described in US-A-1,635,596.

One problem encountered with such elastomeric grouser assemblies is the tendency for particles of soil, rock, ice, and the like to be forced into the bonded boundary area between the elastomeric grouser and the steel anchor plate. Continued entry of foreign matter, acting in conjunction with the tremendous loadings imposed on the elastomeric grouser in operation of the track-laying tractor, tends progressively actually to weaken and destroy the bond between the steel and elastomer thus inducing a bond failure, requiring repair or replacement. Furthermore, it has been discovered that the entry of moisture into this bonded boundary area can be extremely deleterious to the bond life. Moisture in the region of the bonded boundary can promote surface corrosion of the anchor plate at the boundary. This can result in intrusion of increasing amounts of moisture between the elastomeric grouser and the anchor plate resulting in spreading of the degradation of the bond region.

According to one aspect of the present invention, a track shoe has at least one grouser assembly secured thereon, the grouser assembly including a grouser formed of an elastomeric material, a metallic anchor plate bonded to the gouser, and at least one fastener extending through the anchor plate and the track shoe to secure the grouser assembly releasably on the track shoe; characterised by a spacer positioned in abutting relationship between the track shoe and the anchor plate and disposed about the fastener to define a separation space between a main body portion of the anchor plate and the track shoe, the space being at least partly filled with the elastomeric material.

According to a second aspect of the invention, a grouser assembly for attachment to a track shoe comprises a grouser formed of an elastomeric material; and a metallic anchor plate bonded to the grouser; and at least one fastener extending through the anchor plate and, in use, through a track shoe to secure the grouser assembly on the track shoe; characterised by a spacer disposed about the fastener so as, in use, to lie in abutting relationship between a main body portion of the anchor plate and the track shoe and to define a separation space therebetween; the elastomeric material extending around the plate so as, in use, at least partly to fill the space.

Preferably the spacer has a closed periphery and the elastomeric material surrounds, and is advantageously bonded to,the periphery of the spacer.

The new arrangement thus not only minimizes the amount of exposed bond edge between the anchor plate and the track shoe but will also move such bond edge inwardly to a location spaced and sealed from the exposed portion of the track shoe and grouser assembly. Additionally, the elastomeric material - anchor plate interface may take the form of a closed curve or polygon. This is advantageous in that any tendency of the elastomer to pull away from the anchor plate at one point causes the elastomer at other points on the interface to become more strongly resistant to being pulled away from the anchor plate. Cost savings are also realized due to the reduction in cleaning time required to provide elastomeric free mounting surfaces between the anchor plate and the track shoe, a reduced thickness of the anchor plate, and a reduced requirement for masking during surface preparation on the elastomeric free surfaces. In addition, the flatness requirements during molding of the grouser on the anchor plate are less difficult to maintain and treatment of the anchor plate for corrosion resistance is less critical since substantially the entire anchor plate is encapsulated in elastomeric material.

The invention will now be described by way of examples illustrated in the accompanying drawing, wherein:

Figure 1 is an isometric view of a track shoe and grouser assembly in accordance with the present invention with portions of adjoining track shoes shown;

Figure 2 is an enlarged, partially sectioned, exploded view of the track shoe and grouser assembly,

0091816

- 4 -

in which, for the purpose of clarity, track links and track link bolts have been omitted;

Figures 3 and 4 are sections taken on the lines III-III and IV-IV in Figure 1, respectively; and,

Figure 5 is a section similar to Figure 3, but showing a track shoe and grouser assembly having an anchor plate not utilizing the spacers shown in Figures 2 to 4.

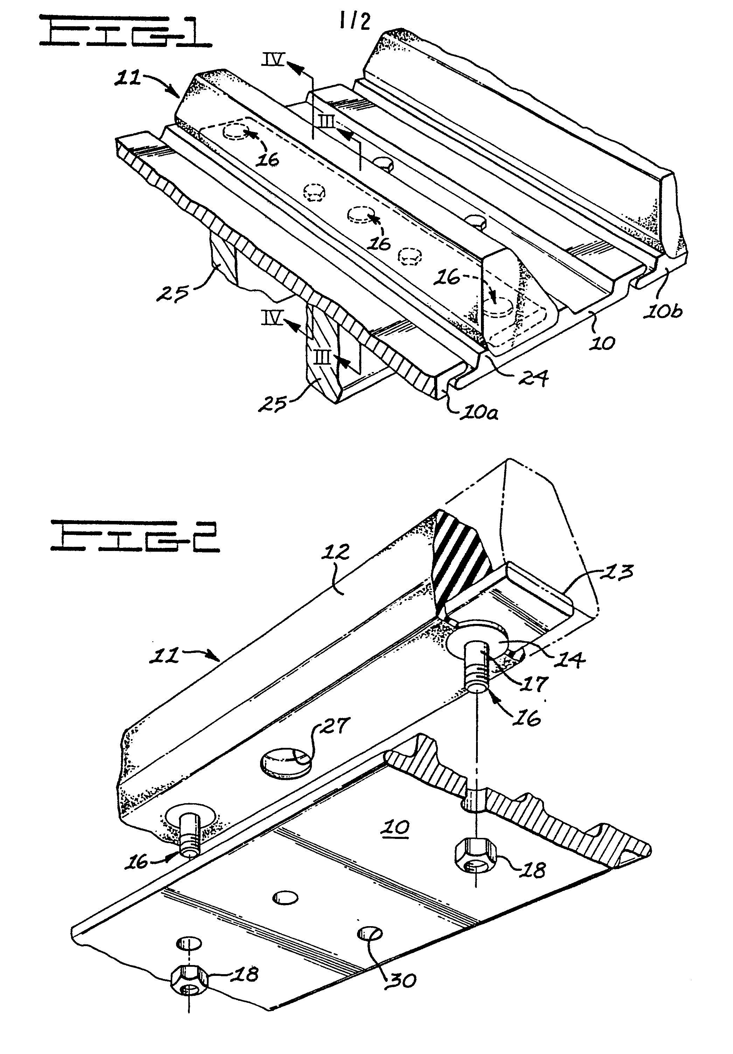

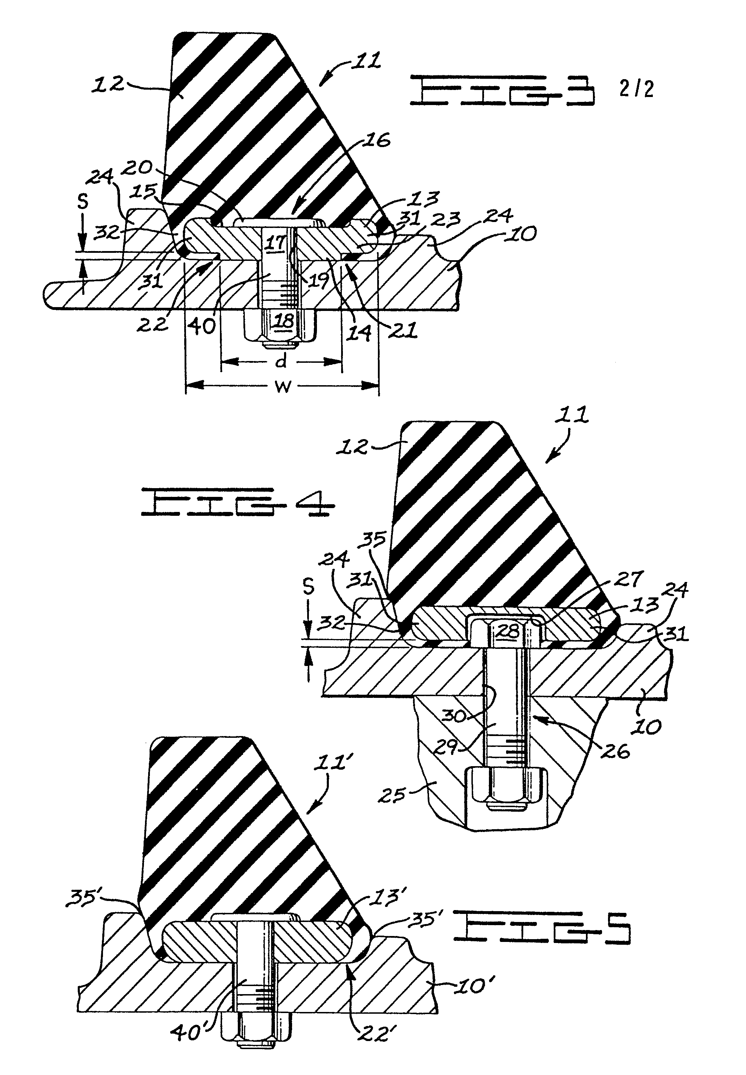

Figures 1 and 2 illustrate a rolled-section steel track shoe 10 having a grouser assembly 11 secured thereon. Although a single grouser assembly 11 is illustrated as being attached to the track shoe 10, it should be understood that two or more such grouser assemblies 11 could be secured to the track shoe 10, depending on the particular application under consideration. Furthermore, it should be understood that although the grouser assembly 11 has particular application to track assemblies for track-laying vehicles, such as tractors and excavators, it could also be applied to track belts for use on rubber tyres. It will be noted that Figure 1 also shows portions of the adjoining track shoes 10a and 10b for the purpose of clearly illustrating the position of the track shoe 10 and the grouser assembly 11 in the track chain assembly.

The grouser assembly 11 includes an elastomeric grouser 12, preferably composed of natural rubber provided with suitable additives to establish the desired mechanical and chemical properties. A metallic anchor plate 13, preferably in the form of a steel insert, is bonded within the elastomeric grouser 12 by conventional compression molding techniques. Those skilled in the art will recognize other suitable methods for encapsulating the anchor plate 13 within the elastomeric grouser material. As best shown in Figure 3, the anchor plate 13 is formed, as by stamping, to define an annular boss 14 on an underside thereof. This stamping operation provides an annular recess 15 on an upper side of the anchor plate 13 in axial alignment with the boss 14.

A plurality of fasteners 16, preferably each including a clinch stud 17 and a nut 18, releasably secure the anchor plate 13 and the attached grouser 12 to the track shoe 10. Alternatively, the fastener 16 could include a bolt or a weld stud. The shank 40 of the clinch stud 17 extends downwardly through the anchor plate 13 and is disposed centrally of the boss 14. Prior to compression molding of the grouser assembly 11 the clinch stud 17 is press-fitted into a bore 19 of the anchor plate 13. Preferably, the shank portion 40 is serrated and is so sized as to undergo significant cold flow within the bore 19 during the press-fit process thereby establishing an extremely torsion resistant press-fit between the clinch stud 17 and the bore 19. A head 20 of the clinch stud 17 is disposed within the recess 15 and is thereafter encapsulated within the elastomeric grouser 12, as shown.

As best shown in Figure 4, the track shoe 10 is secured to track links 25 by means of bolts 26. The grouser assembly 11 is provided with apertures 27 for receiving bolt heads 28 of the bolts 26. Preferably this bolt aperture 27 is sized very slightly larger than the bolt head 28 which it will receive. The shank 29 of each link bolt 26 passes through link bolt apertures 30 in the track shoe 10.

Figure 5 illustrates a different grouser assembly 11' wherein a boss 14 is not utilized resulting in the entire lower, flat surface of an anchor plate 13' to contact the track shoe 10'. Thus, the relatively enlarged bonded edges and boundary areas 22' between the rubber grouser 12' and the anchor plate 13' are relatively less resistant to the ingress of soil and the like therein. Furthermore, the elastomeric material - anchor plate interface assumes the shape of a straight line rather than a closed curve (e.g. a circle or polygon). Accordingly, once a portion of this straight line interface has failed the remaining portion of this interface becomes relatively less resistant to failure.

As shown in Figures 3 and 4, the boss 14 serves as a spacer or stand-off positioned between the track shoe 10 and a main body portion 23 of the anchor plate 13 and disposed about the clinch stud 17 to define a separation space "s", preferably in the range of about 1.0 or 5.0 mm, between the anchor plate main body portion 23 and the track shoe 10. This space is filled with the elastomeric material of the grouser 12.

Preferably, this strip of elastomeric material intermediate and surrounding the bosses 14 is somewhat thicker in its uncompressed state than the distance "s", the separation space. Consequently, in addition to substantially reducing the area of the bond edge 22, the inward displacement of the bond edge 22 within the confines of the anchor plate 13 further reduces the tendency for soil entry therein by permitting the establishment of a sealing region surrounding each boss 14. It is advantageous to configure the elastomeric material surrounding the bolt head apertures 27 as close as is possible to the shape of the bolt head 28. This results in the establishment of a seal surrounding the bolt head 28 in response to attachment of the grouser assembly 11 to the track shoe 10.

The track shoe 10 is provided with laterally spaced, longitudinally extending ribs 24. The grouser assembly 11 is situated intermediate these ribs 24 and extends generally parallel therewith. The anchor plate 13 has opposed lateral sides 31, one corresponding to each of the ribs 24. As previously detailed, the elastomeric material of the grouser 12 extends fully around the anchor plate 12, and has a rib-plate compression portion 32 intermediate each rib 24 and the corresponding one of the lateral sides 31. The ribs 24, anchor plate 13 and rib-plate compression portion 32 thickness are so sized and configured that in response to the grouser assembly 11 being firmly secured to the track shoe 10, each rib-plate compression portion 32 is firmly compressed intermediate the corresponding rib 24 and lateral side 31. This is highly advantageous in that it establishes a seal tending to prevent the intrusion of particulate matter or moisture intermediate the track shoe 10 and elastomeric grouser 12. It is further advantageous in that it establishes a compressive preload of the rib-plate compression portion·32. This minimizes or eliminates tensile loading of the elastomer-anchor plate bond at this point. Minimization or elimination of tensile loading at the bond region is desirable as metal-elastomer bonds are generally much stronger in compression than in tension.

It will be noted from Figures 3-5 that the slight excess of elastomeric material in the rib-plate compression portion results in a slight bulging of the grouser 12 at bounds of rib-plate contact 35. This bulging has been somewhat exaggerated in Figures 3-5 for the purpose of illustration. This displacement of the "excess" elastomeric material results in a significant compression of the elastomeric material at the rib-plate contact bounds 35. This ensures that not only is a seal established intermediate the rib 24 and the grouser 12, but that a good seal is established precisely at the bounds 35 of contact.

As further shown in Figure 3, the boss 14 has a diameter "d" that is preferably from 0.4 to 1.0 times a width "w" of the anchor plate 13. The diameter "d" of the boss 14 is preferably sufficiently small to place the bond edges 22 substantially inwardly from the outer edges of the anchor plate 13 to improve the resistance to bond failure. The diameter "d" is sufficiently large, however, to provide adequate metal-to-metal contact between the underside of the boss 14 and the track shoe 10 to afford the track shoe - grouser assembly with the desired degree of structural integrity.

Although the boss 14 is preferably annular, it should be understood that it could be otherwise shaped; it could, for example, be square or oblong. While the boss 14 can assume numerous configurations it is important that it have a closed periphery; that is, the boss 14 should be configured such that the elastomeric material of the grouser 12 totally surrounds its periphery. In addition, although the boss 14 is preferably formed integrally on an underside of the anchor plate 13, alternatively, it could constitute a separate member, such as a flat steel washer.

Industrial Applicability

The present grouser assembly 11 finds particular application to track shoes employed on a track assembly for a track-laying vehicle, such as an agricultural tractor. The tractor is thus adapted for travel over roads and highways without causing damage thereto.

The grouser assembly can be compression molded and bolted to the track shoe 10 under a predetermined torque. As discussed above, bolting of the grouser assembly on the track shoe will preferably place the elastomeric material filling space "s" under compression to aid in sealing-out soil and the like. The metal-to-metal contact between the flat underside of the anchor boss 14 and the abutting flat surface of the track shoe 10 will aid in securely retaining the grouser assembly 11 on the track shoe 10 during operation of the tractor.

- 10 -

## CLAIMS

1. A track shoe (10) having at least one grouser assembly (11) secured thereon, the grouser assembly including a grouser (12) formed of an elastomeric material, a metallic anchor plate (13) bonded to the grouser, and at least one fastener (16) extending through the anchor plate and the track shoe to secure the grouser assembly releasably on the track shoe; characterised by a spacer (21) positioned in abutting relationship between the track shoe (10) and the anchor plate (13) and disposed about the fastener (16) to define a separation space (s) between a main body portion (23) of the anchor plate and the track shoe, the space being at least partly filled with the elastomeric material.

2. A grouser assembly (11) for attachment to a track shoe (10), the grouser assembly comprising a grouser (12) formed of an elastomeric material; and a metallic anchor plate (13) bonded to the grouser; and at least one fastener (16) extending through the anchor plate and, in use, through a track shoe (10) to secure the grouser assembly (11) on the track shoe; characterised by a spacer (21) disposed about the fastener so as, in use, to lie in abutting relationship between a main body portion (23) of the anchor plate and the track shoe and to define a separation space (s) therebetween; the elastomeric material extending around the plate so as, in use, at least partly to fill the space.

3.      A track shoe or grouser assembly according to claim 1 or claim 2, wherein the spacer (21) has a closed periphery (22) and the elastomeric material surrounds the periphery of the spacer.

4.      A track shoe or grouser assembly according to claim 3, wherein the elastomeric material is bonded to the periphery of the spacer.

5.      A track shoe or grouser assembly according to any one of the preceding claims, wherein the spacer (21) is an annular boss (14) formed integrally on an underside of the anchor plate (13).

6.      A track shoe or grouser assembly according to claim 5, further including an annular recess (15) formed on an upper side of the anchor plate (13) in alignment with the boss (14), the fastener (16) including a bolt (17) having a head (20) disposed in the recess (15).

7.      A track shoe or grouser assembly according to any one of the preceding claims, wherein the fastener (16) includes a clinch stud (17).

8.      A track shoe or grouser assembly according to any one of the preceding claims, wherein the diameter (d) of the spacer (21) is from 0.4 to 1.0 times a width (w) of the anchor plate (13).

9.      A track shoe or grouser assembly according to any one of the preceding claims, wherein the elastomeric material occupying or arranged to occupy the separation space (s) is, in its uncompressed state, of a thickness greater than that of the separation space.

10.      A track shoe according to claim 1, or to any one of claims 3 to 10 when dependent on claim 1, wherein the track shoe (10) has a pair of longitudinally extending ribs (24), the anchor plate (13) being

- 12 -

positioned between the ribs and having opposed lateral sides (31) each facing a corresponding one of the ribs, the elastomeric material extending between each of the ribs and a respective one of the lateral sides to define a rib-plate compression portion (32), the ribs, anchor plate and elastomeric rib-plate compression portion being configured such that in response to the grouser assembly (11) being affixed to the track shoe the elastomeric rib-plate compression portions are compressed between the anchor plate and the ribs.

0091816

**FIG.1**

**FIG.2**

FIG-3   2/2

FIG-4

FIG-5